(19) Europäisches Patentamt / European Patent Office / Office européen des brevets

(11) **EP 4 004 492 B1**

(12) **FASCICULE DE BREVET EUROPEEN**

(45) Date de publication et mention de la délivrance du brevet:
**04.02.2026 Bulletin 2026/06**

(21) Numéro de dépôt: **20753427.2**

(22) Date de dépôt: **16.07.2020**

(51) Classification Internationale des Brevets (IPC):
***G01C 25/00*** *(2006.01)*

(52) Classification Coopérative des Brevets (CPC):
**G01C 25/005**

(86) Numéro de dépôt international:
**PCT/IB2020/056696**

(87) Numéro de publication internationale:
**WO 2021/014294 (28.01.2021 Gazette 2021/04)**

(54) **PROCÉDÉ ET DISPOSITIF DE RECALAGE D'UNE CENTRALE INERTIELLE**

VERFAHREN UND VORRICHTUNG ZUM KALIBRIEREN EINER TRÄGHEITSEINHEIT

METHOD AND DEVICE FOR CALIBRATING AN INERTIAL UNIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **22.07.2019 FR 1908186**

(43) Date de publication de la demande:
**01.06.2022 Bulletin 2022/22**

(73) Titulaire: **KNDS France**
**78034 Versailles Cedex (FR)**

(72) Inventeurs:
• **JORGE, Ophélie**
 **18023 Bourges (FR)**
• **PIZON, Benoît**
 **18023 Bourges (FR)**

(74) Mandataire: **Cabinet Chaillot**
 **16/20, avenue de l'Agent Sarre**
 **B.P. 74**
 **92703 Colombes Cedex (FR)**

(56) Documents cités:
**EP-A1- 3 495 837     US-A- 5 809 457**
**US-B1- 8 260 567**

EP 4 004 492 B1

**Description**

Le domaine technique de l'invention est celui des procédés et dispositifs permettant le recalage d'une centrale inertielle équipant une plateforme, telle un véhicule et en particulier un véhicule terrestre.

Il est connu que les centrales inertielles utilisent des accéléromètres et des gyromètres pour détecter les déplacements et les rotations des axes d'un repère géométrique lié à la plateforme par rapport à un repère terrestre de référence.

Cependant les centrales inertielles dérivent au fil du temps et il est donc nécessaire de réaliser un recalage périodique de ces centrales afin de garantir un niveau de précision minimal. Il est également nécessaire de les initialiser au démarrage.

Aujourd'hui les recalages peuvent être effectués au moyens de signaux GPS. Cependant, lorsque la centrale doit être initialisée et que le véhicule doit rester immobile, l'information GPS n'est pas suffisante pour l'alignement de la centrale au véhicule. Par ailleurs, lorsque ces signaux sont brouillés, les recalages sont effectués par des équipes dédiées qui ont à leur disposition des moyens de mesure permettant de connaître la position et l'orientation de la plateforme, afin de procéder à l'alignement de celle-ci avec la centrale inertielle.

Ces interventions sont contraignantes. Elles immobilisent la plateforme un certain temps et nécessitent des personnels supplémentaires qualifiés.

Il est par ailleurs connu dans le domaine des missiles balistiques intercontinentaux de recaler la centrale inertielle du missile à partir d'images radar du terrain survolé sur lequel sont localisés au moins trois repères dont les coordonnées ont été introduites avant le tir. Ce dispositif fait l'objet du brevet US5755400.

Il est cependant associé à un engin agissant en survol du terrain et doté d'un radar de surveillance. Ce dispositif n'est pas adapté à une plateforme telle qu'un véhicule terrestre qui doit par ailleurs pouvoir recaler sa centrale inertielle plusieurs fois au cours d'une mission et sans que des repères bien définis ne soient a priori connus.

On connaît aussi par le brevet US5809457 un dispositif et un procédé de pointage inertiel d'une cible dont les coordonnées sont connues à partir d'une plateforme fixe ou mobile. Dans ce dispositif la centrale inertielle est découplée de la plateforme et montée directement sur l'équipement de pointage. Cependant ce pointage met systématiquement en œuvre le système de positionnement GPS qui est susceptible d'être brouillé ou inaccessible sur le terrain.

La demande de brevet EP 3495837 A1 divulgue un système de recalage collaboratif de plateformes basé sur le principe du recalage en position par l'utilisation d'amers.

Le brevet US 8260567 B1 divulgue un procédé de détermination de la position d'une plateforme en mouvement basée uniquement sur les angles calculés correspondant aux positions d'au moins trois amers sur une image acquise à l'aide d'une caméra embarquée.

C'est le but de l'invention que de proposer un procédé et un dispositif de recalage d'une centrale inertielle pouvant aisément être mis en œuvre par l'équipage du véhicule sans nécessiter d'équipements ou d'outillages spécifiques et sans imposer de compétences particulières.

Ainsi l'invention a pour objet un procédé de recalage d'une centrale inertielle équipant un véhicule terrestre, le véhicule étant équipé d'au moins une tourelle orientable en site et en gisement pour observer le terrain autour du véhicule et déterminer au moins une direction de pointage d'au moins un objet présent sur le terrain, des moyens de mesure angulaire pouvant donner les angles d'orientation en site et en gisement de la au moins une direction de pointage dans un repère ($R_V$) lié au véhicule, ou repère véhicule, le véhicule étant par ailleurs équipé de moyens de calcul auxquels sont reliés les moyens de mesure angulaire et d'une base de données cartographiques permettant de connaître les coordonnées de différents Amers présents sur le terrain dans un repère terrestre ($R_T$), procédé comportant les étapes suivantes :

on réalise le pointage, à partir de la au moins une tourelle, d'au moins trois Amers présents sur le terrain et dont les coordonnées géographiques dans le repère terrestre ($R_T$) sont connues ;
on enregistre les angles de site ($\beta$) et de gisement ($\alpha$) de chaque direction de pointage dans le repère véhicule ($R_V$) ;
on détermine des coefficients d'une matrice $M_{TV}$ de passage du repère terrestre ($R_T$) au repère véhicule ($R_V$) en mettant en œuvre au moins un calcul de la direction des Amers dans le repère véhicule ($R_V$) grâce aux mesures des angles des directions de pointage et la connaissance des coordonnées des Amers dans le repère terrestre ($R_T$) ;
on recale la centrale inertielle du véhicule à partir des valeurs d'orientation et éventuellement de position du repère véhicule ($R_V$) par rapport au repère terrestre ($R_T$) ainsi calculées.

Selon un premier mode de réalisation, et lorsque le véhicule est équipé d'un système de positionnement par satellite (ou GPS), le procédé comporte les étapes suivantes :

on calcule les trois vecteurs ($Amer_i$) des directions de pointage des Amers dans un repère véhicule réduit ($R_{TV}$) à partir des positions des Amers dans le repère terrestre ($R_T$) qui sont données par la cartographie et de la position du véhicule dans le repère terrestre ($R_T$) qui est donnée par le GPS, le repère véhicule réduit ($R_{TV}$) est un repère lié au véhicule mais dont les axes sont parallèles aux axes du repère terrestre ($R_T$), le calcul est donc effectué en considérant que les angles d'orientation du repère véhicule ($R_V$) par rapport au repère terrestre ($R_T$) sont nuls ;

on calcule les trois vecteurs ($Amer_{iV}$) des directions de pointage des Amers dans le repère véhicule ($R_V$) à partir des angles de site et gisement mesurés ;

on en déduit les angles d'orientation du repère véhicule ($R_V$) par rapport au repère terrestre ($R_T$) par résolution des trois produits matriciels (un par Amer):

$Amer_i = R_{ox}*R_{oy}*R_{oz} * Amer_{iV} = M_{TV} * Amer_{iV}$, expression dans laquelle $Amer_i$ est le vecteur de pointage d'un Amer ($P_i$) dans le repère véhicule réduit ($R_{TV}$) tel que déduit de la cartographie, $Amer_{iV}$ est le vecteur de pointage du même Amer ($P_i$) dans le repère véhicule ($R_V$) calculé à partir des angles de site et gisement mesurés et $R_{ox}$, $R_{oy}$ et $R_{oz}$ sont les matrices de rotation permettant de passer du repère terrestre au repère véhicule, le produit $R_{ox}*R_{oy}*R_{oz}$ de ces matrices constituant la matrice $M_{TV}$ de passage du repère terrestre ($R_T$) au repère véhicule ($R_V$), matrice qui est réduite aux seuls coefficients de rotation et donnant les angles d'orientation recherchés.

Selon un second mode de réalisation, et lorsque le véhicule est équipé d'un télémètre porté par la tourelle, le procédé comporte les étapes suivantes :

on calcule les coordonnées ($P_{iV}$) des Amers ($P_i$) dans le repère véhicule ($R_V$) à partir des angles de site et gisement mesurés et des distances ($D_i$) mesurées par le télémètre ;

on détermine les coordonnées ($P_{iT}$) des Amers ($P_i$) dans le repère terrestre ($R_T$) à partir de la cartographie ;

on en déduit les angles d'orientation du repère véhicule ($R_V$) par rapport au repère terrestre ($R_T$) ainsi que les coordonnées du véhicule dans le repère terrestre ($R_T$) par la résolution des trois produits matriciels (un par Amer) :

$P_{iT} = M_{TV} * P_{iV}$, expression dans laquelle $P_{iT}$ est le vecteur donnant les coordonnées d'un Amer ($P_i$) dans le repère terrestre ($R_T$), $P_{iV}$ est le vecteur donnant les coordonnées du même Amer ($P_i$) dans le repère véhicule ($R_V$), et $M_{TV}$ est la matrice de passage du repère terrestre ($R_T$) au repère véhicule ($R_V$), les coefficients de cette matrice donnant d'une part les angles d'orientation du repère véhicule ($R_V$) par rapport au repère terrestre ($R_T$) et d'autre part la position du repère véhicule ($R_V$) par rapport au repère terrestre ($R_T$).

Avantageusement, afin d'éviter des erreurs de mesure, on ne commandera le recalage de la centrale inertielle que lorsque le véhicule est à l'arrêt, cet état à l'arrêt étant détecté par des moyens appropriés (odomètre, compteur de vitesse).

Avantageusement, on pourra choisir un mode de calcul de recalage utilisant le système de positionnement par satellite ou un mode de calcul de recalage utilisant le télémètre.

Selon un mode particulier d'exécution, après le choix des Amers par un opérateur, on détermine les incertitudes angulaires prévisibles pour les angles de dévers, de pente et de cap par lecture d'abaques de précision préétablies et on peut alors proposer à l'opérateur de modifier ses choix d'Amers si la ou les incertitudes sont supérieures à au moins un seuil.

L'invention a également pour objet un dispositif de recalage d'une centrale inertielle équipant un véhicule terrestre, dispositif mettant en œuvre le procédé selon l'invention, dispositif caractérisé en ce qu'il comporte des moyens de calcul et une base de données cartographiques permettant de connaître les coordonnées dans un repère terrestre ($R_T$) d'au moins trois Amers présents sur le terrain, le dispositif comportant également des moyens de mesure angulaire de l'orientation en site et en gisement d'au moins une tourelle permettant d'observer le terrain autour du véhicule et de déterminer au moins une direction de pointage, les moyens de mesure angulaire pouvant donner les angles d'orientation en site ($\beta$) et en gisement ($\alpha$) de la au moins une direction de pointage ($d_i$) dans un repère ($R_V$) lié au véhicule, ou repère véhicule, les moyens de calcul permettant de combiner les mesures des angles d'observation en site et en gisement et les coordonnées des Amers connues de la base cartographique, pour déterminer des coefficients d'une matrice $M_{TV}$ de passage du repère terrestre ($R_T$) au repère véhicule ($R_V$), les moyens de calcul étant reliés à la centrale inertielle pour pouvoir la recaler à partir des valeurs d'orientation et éventuellement de position du repère véhicule ($R_V$) par rapport au repère terrestre ($R_T$) ainsi calculées.

Selon un mode particulier de réalisation, le dispositif comporte un système de positionnement par satellite (ou GPS), ce dernier étant utilisé par les moyens de calcul pour déterminer le positionnement du repère véhicule ($R_V$) par rapport au repère terrestre ($R_T$).

Selon un autre mode de réalisation, le dispositif comporte un télémètre porté par la tourelle, ce dernier étant utilisé en combinaison avec les moyens de mesure angulaire de l'orientation en site et en gisement de la tourelle pour permettre le calcul des coordonnées ($P_{iV}$) des Amers dans le repère véhicule ($R_V$).

Avantageusement, le dispositif de recalage pourra comporter une interface Homme-Machine donnant le choix à un opérateur entre un mode de calcul de recalage utilisant le système de positionnement par satellite et un mode de calcul de recalage utilisant le télémètre.

Selon un mode particulier de réalisation, le dispositif pourra incorporer au moins une abaque permettant de déterminer les incertitudes angulaires prévisibles pour les angles de dévers, de pente et de cap après le choix des Amers.

Selon une modalité particulière de réalisation, le dispositif pourra comporter une interface Homme-Machine permettant d'indiquer à un opérateur si la ou les incertitudes sont supérieures à au moins un seuil.

Avantageusement, l'interface Homme-Machine pourra imposer à l'Opérateur de modifier ses choix d'Amers si la ou les incertitudes sont supérieures à l'au moins un seuil.

L'invention sera mieux comprise à la lecture de la description qui va suivre de modes particuliers de réalisation, description faite en référence aux dessins annexés et dans lesquels :

[Fig. 1] montre une plateforme sur le terrain positionnée par rapport à trois amers ;

[Fig. 2] est un schéma représentant le dispositif de recalage selon l'invention ;

[Fig. 3] est un logigramme schématisant une variante de réalisation du procédé selon l'invention.

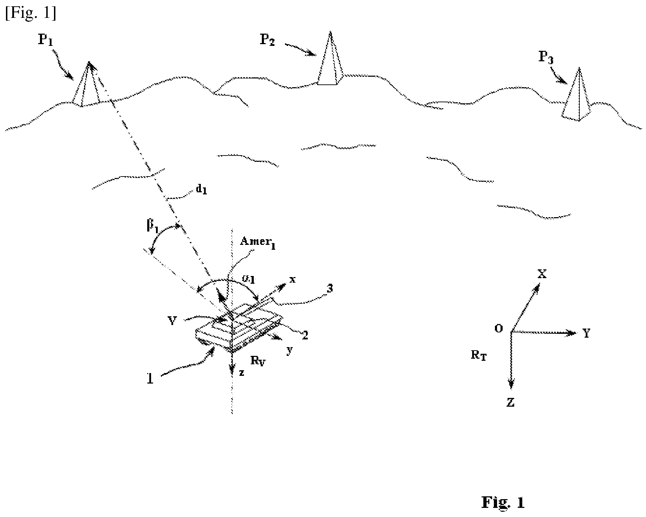

En se reportant à la figure 1, une plateforme 1 est positionnée sur le terrain. La plateforme 1 est ici un véhicule blindé terrestre, mais elle pourrait être un autre type de véhicule, par exemple un camion, un véhicule de commandement, un véhicule léger ou un véhicule équipé d'une arme tel un système d'artillerie.

Dans tous les cas le véhicule 1 qui met en œuvre le dispositif selon l'invention est équipé d'une tourelle 2, c'est-à-dire d'un système mobile pouvant être orienté en site et en gisement dans un repère $R_V$ lié au véhicule.

Ici la tourelle 2 est la tourelle principale du véhicule blindé, tourelle équipée d'un canon 3 de gros calibre (supérieur à 50mm). La tourelle 2 pourrait être une tourelle canon de moyen calibre (calibre compris entre 20mm et 50mm), voire de petit calibre (calibre inférieur à 20mm) ou encore une tourelle d'observation non armée et dotée d'un système de visée.

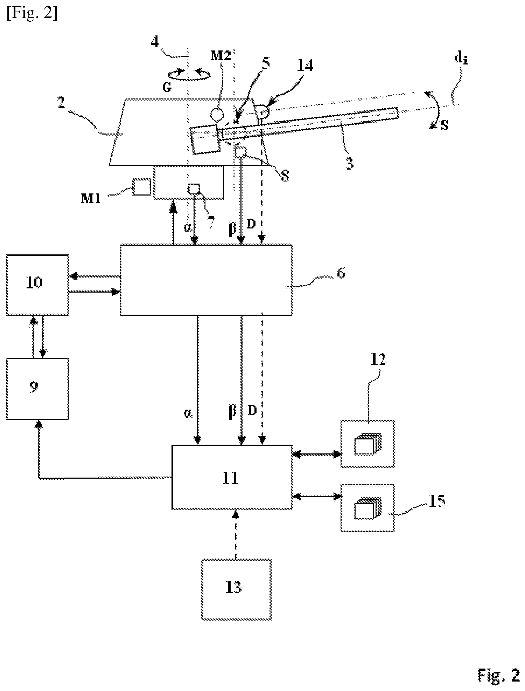

D'une façon classique et comme schématisé à la figure 2, les tourelles 2 sont dotées d'une première motorisation M1 permettant de faire pivoter la tourelle 2 par rapport à un axe vertical 4 pour réaliser un pointage en gisement (flèche G). Elles sont équipées par ailleurs d'une seconde motorisation M2 pour faire pivoter l'arme (ou le système de visée pour une tourelle non armée) par rapport à un axe horizontal 5 pour réaliser un pointage en site (flèche S).

Les pointages sont commandés par un système d'asservissement de pointage 6 et les valeurs des angles de pointage en gisement $\alpha$ et en site $\beta$ sont mesurées par des codeurs : un codeur en gisement 7 et un codeur en site 8.

On a également représenté à la figure 2 une centrale inertielle 9 dont les informations alimentent un calculateur 10 du véhicule qui supervise les différentes fonctions du véhicule et en particulier le système d'asservissement de pointage 6.

Conformément à l'invention le dispositif de recalage de la centrale inertielle 9 comprend des moyens de calcul 11 et une base de données cartographiques 12.

Les moyens de calcul 11 ont été isolés sur la figure 2 pour la clarté de la présentation, mais il est clair que ces moyens seront le plus souvent incorporés au calculateur 10 du véhicule dont les ressources de calcul permettent de réaliser les traitements nécessaires à la mise en œuvre du procédé selon l'invention.

La base de données cartographique 12 est également représentée isolée mais elle sera avantageusement intégrée dans une mémoire interne des moyens de calcul 11 (ou du calculateur 10).

Les bases de données cartographiques sont classiques et disponibles dans le commerce. Ce sont des bases de données numériques qui permettent la réalisation de cartes papier ou des cartes numériques incorporées aujourd'hui dans les systèmes de navigation des véhicules (civils ou militaires) ou encore accessibles sur internet.

Il est clair que la précision de la base de données cartographique 12 conditionnera dans une certaine mesure la précision du recalage de la centrale inertielle 9 qu'il sera possible d'assurer.

Les moyens de calcul 11 sont alimentés aussi par les signaux de positionnement en gisement $\alpha$ et en site $\beta$ qui proviennent des codeurs en gisement 7 et en site 8. On a représenté ici des câblages sortant du système d'asservissement de pointage 6 et conduisant les signaux aux moyens de calcul 11.

Il est clair que des câblages spécifiques pourraient provenir directement des codeurs 7 et 8, si les moyens de calcul 11 incorporent les dispositifs de calibration et mise en forme permettant d'exploiter les signaux issus des codeurs 7 et 8.

Selon un premier mode de réalisation de l'invention, les moyens de calcul 11 sont également alimentés par les signaux fournis par un moyen de positionnement par satellite 13 (moyen plus communément connu par l'acronyme anglo-saxon GPS ou « Global Positioning System »).

Conformément à l'invention, et en référence à la figure 1, on va chercher à connaître le positionnement et l'orientation, dans un repère fixe terrestre $R_T$, d'un repère $R_V$ lié au véhicule.

Ces données de positionnement et d'orientation seront ensuite fournies à la centrale inertielle 9 pour la recaler par rapport au repère terrestre $R_T$ et compenser ainsi ses dérives. Le repère terrestre $R_T$ a pour centre O et pour axes OX (vers le nord), OY (vers l'est) et OZ (vers le centre de la terre).

Le repère véhicule $R_V$ est centré en V et a pour axes Vx (vers l'avant du véhicule), Vy (vers la droite du véhicule) et Vz (vers le sol). Le point V est un point arbitraire du véhicule correspondant à l'origine de la ligne de visée d issue de la tourelle 2.

On va calculer le positionnement et l'orientation du repère $R_V$ lié au véhicule 1 en utilisant trois Amers $P_1$, $P_2$ et $P_3$ présents sur le terrain. La tourelle 2 sera pointée successivement vers chaque Amer ($P_i$) et les angles de pointage en site et en gisement pour chaque Amer ($\alpha_i$, $\beta_i$) seront fournis aux moyens de calcul 11. Les angles seront fournis par l'asservissement de pointage 6 ou bien par les codeurs 7 et 8 directement.

Les Amers seront choisis par la personne qui dans le véhicule met en œuvre le procédé de recalage de la centrale inertielle 9. Ces Amers peuvent donc être différents d'une mission à l'autre et ils ne sont pas figés a priori mais choisis au moment du recalage.

Les Amers $P_i$ devront cependant pouvoir être repérés dans la base de données cartographiques 12. Il sera avantageux de choisir des éléments du paysage clairement repérables et pouvant être pointés avec précision par la tourelle 2 : immeubles, monuments, sommets de montagnes...

Suivant ce premier mode de réalisation, les moyens de calcul 11 disposent des données d'entrée suivantes :

Les coordonnées ($P_{iT}$) des Amers dans le repère terrestre $R_T$ qui sont fournies par la base de données cartographiques 12 ;
Les coordonnées ($V_T$) du véhicule dans le repère terrestre $R_T$ qui sont fournies par le GPS ;
Les angles de pointage en site et gisement ($\alpha_i$, $\beta_i$) pour chaque Amer, i variant de 1 à 3.

Suivant le procédé, on va tout d'abord calculer les trois vecteurs directeurs ($Amer_i$) des directions de pointage des Amers dans un repère véhicule réduit ($R_{TV}$), qui est positionné en V et dont les axes sont parallèles à ceux du repère terrestre $R_T$. Ce calcul est effectué à partir des positions des Amers dans le repère terrestre ($R_T$), qui sont données par la cartographie, et de la position du véhicule dans le repère terrestre ($R_T$), qui est donnée par le GPS.

Le calcul est donc effectué en considérant que les angles d'orientation ($\varphi, \theta, \psi$) du repère véhicule ($R_V$) par rapport au repère terrestre ($R_T$) sont nuls.

Pour la clarté de la figure 1, un seul vecteur $Amer_1$ est représenté.

La base de données cartographiques donne les coordonnées des Amers dans le repère terrestre $R_T$ et le GPS celle du véhicule dans le même repère terrestre. Il est donc possible de déterminer les directions de pointage entre le véhicule et chaque Amer dans le repère véhicule réduit $R_{TV}$, repère ayant même centre V que le Repère véhicule Rv mais ayant des axes x,y,z qui sont parallèles aux axes du repère terrestre.

Les vecteurs directeurs de ces directions de pointage sont faciles à déterminer puisque la distance entre le véhicule et chaque Amer peut aussi être calculée à partir de la base de données cartographiques.

Pour réaliser ce calcul, il suffit de déterminer tout d'abord la distance entre le véhicule 1 et chaque Amer $P_i$ sur les trois directions $d_i$ de pointage des Amers par la tourelle 2.

Soit i le numéro de l'Amer : i = {1,2,3} ; ($V_X, V_Y, V_Z$) les coordonnées du véhicule dans le repère terrestre $R_T$ ; ($P_{iX}, P_{iY}, P_{iZ}$) les coordonnées d'un Amer (i) dans le repère terrestre $R_T$; ($dX_i, dY_i, dZ_i$) les coordonnées dans le repère terrestre $R_T$ de la direction $d_i$ joignant le véhicule à l'Amer (i) considéré.

On calcule donc :

$$dX_i = -(V_X - P_{iX})$$

$$dY_i = -(V_Y - P_{iY})$$

$$dZ_i = -(V_Z - P_{iZ})$$

Puis la distance totale $D_i$ entre le véhicule et chaque Amer : $D_i$ = sqrt ($dX_i^2 + dY_i^2 + dZ_i^2$) (Nota : dans cette expression « sqrt » signifie racine carrée).

On en déduit ensuite, dans le repère véhicule réduit $R_{TV}$, les vecteurs directeurs ($Amer_i$) de la direction $d_i$ de la tourelle 2 lorsqu'elle pointe vers chaque Amer : **$Amer_i$** = ($Xt_i$, $Yt_i$, $Zt_i$) avec :

$$Xt_i = dX_i / D_i$$

$$Yt_i = dY_i / D_i$$

$$Zt_i = dZ_i/D_i$$

Par ailleurs on calcule les trois vecteurs directeurs ($Amer_{iV}$) des directions de pointage des Amers dans le repère véhicule ($R_V$) à partir des angles de site et gisement mesurés.

Si on note $\alpha_i$ l'angle de pointage en gisement pour l'Amer ($P_i$) et $\beta_i$ l'angle de pointage en site pour ce même Amer ($P_i$), on pourra calculer :

$$X_i = \cos(\alpha_i).\cos(\beta_i)$$

$$y_i = \sin(\alpha_i).\cos(\beta_i)$$

$$z_i = -\sin(\beta_i)$$

Donc le vecteur **$Amer_{iV}$** a pour coordonnées : $(x_i,y_i,z_i)$ dans le repère véhicule $R_V$.

Il est ensuite possible de déduire les angles d'orientation du repère véhicule ($R_V$) par rapport au repère terrestre ($R_T$) par résolution des trois produits matriciels (un par Amer):

$$Amer_i = R_{ox}*R_{oy}*R_{oz} * Amer_{iv} = M_{TV} * Amer_{iv}$$

Dans cette expression :

$Amer_i$ est le vecteur de pointage d'un Amer dans le repère véhicule réduit ($R_{TV}$) tel que déduit de la cartographie : $Amer_i = (Xt_i, Yt_i, Zt_i)$ ;

$Amer_{iV}$ est le vecteur de pointage du même Amer dans le repère véhicule ($R_V$) calculé à partir des angles de site et gisement mesurés $Amer_{iV} = (x_i,y_i,z_i)$ ;

$R_{ox}$, $R_{oy}$ et $R_{oz}$ sont les matrices de rotation permettant de passer du repère terrestre $R_T$ au repère véhicule $R_V$.

D'une façon classique :

[Math. 1]

$$Rox = \begin{bmatrix} 1 & 0 & 0 \\ 0 & cos\varphi & -sin\varphi \\ 0 & sin\varphi & cos\varphi \end{bmatrix} \quad Roy = \begin{bmatrix} cos\theta & 0 & sin\theta \\ 0 & 1 & 0 \\ -sin\theta & 0 & cos\theta \end{bmatrix} \quad Roz = \begin{bmatrix} cos\psi & 0 & -sin\psi \\ sin\psi & 1 & cos\psi \\ 0 & 0 & 0 \end{bmatrix}$$

Expressions dans lesquelles :

$\varphi$ est l'angle de dévers (rotation du repère véhicule $R_V$ autour de l'axe ox du repère terrestre $R_T$ ;
$\theta$ est l'angle de pente (rotation du repère véhicule $R_V$ autour de l'axe oy du repère terrestre $R_T$ et
$\Psi$ est l'angle de cap (rotation du repère véhicule $R_V$ autour de l'axe oz du repère terrestre $R_T$.

Le produit $R_{ox}*R_{oy}*R_{oz}$ de ces matrices constitue la matrice $M_{TV}$ de passage du repère terrestre ($R_T$) au repère véhicule ($R_V$), matrice qui est ici réduite aux seuls coefficients de rotation (et qui n'inclut donc pas les translations d'un repère à l'autre).

On obtient donc trois équations pour chaque Amer et la résolution des neuf équations permettra de calculer les trois angles d'orientation ($\varphi,\theta,\psi$) recherchés.

Grâce à ces calculs on connaît donc les angles ($\varphi,\theta,\psi$) entre les axes du repère du véhicule $R_V$ et on connaît par ailleurs par le GPS la localisation du véhicule. Il est donc aisé de recaler la centrale inertielle 9 avec ces nouvelles informations de positionnement et orientation du véhicule.

Le recalage lui-même est une opération classique qu'il n'est pas nécessaire de décrire en détails. Les centrales inertielles du marché sont toutes dotées d'une entrée de signaux permettant de fournir des données de positionnement et d'orientation mises à jour.

Ce mode de réalisation de l'invention est particulièrement discret puisque les Amers sont localisés uniquement par les pointages de la tourelle du véhicule.

Il nécessite cependant d'avoir un système GPS opérationnel, donc qui ne soit pas brouillé.

Le second mode de réalisation de l'invention diffère du premier en ce que la tourelle 2 est équipée d'un télémètre 14 (figure 2), qui est simbleauté avec l'arme 3, et qui permet de connaître la distance D entre une cible qu'il pointe et le véhicule 1.

Les signaux fournis par le télémètre 14 sont utilisés par la conduite de tir 6 associée au calculateur 10.

Conformément à ce mode de réalisation de l'invention ces signaux sont également envoyés aux moyens de calcul 11 (liaison filaire D).

Comme dans le mode de réalisation précédent, il est bien entendu que le découpage structurel entre le calculateur 10 du véhicule et les moyens de calcul 11 dédiés au recalage de la centrale inertielle 9 a pour seul but de rendre le descriptif plus clair. Le procédé de recalage selon l'invention peut mettre en œuvre des algorithmes qui seront incorporés au calculateur 10 (sans qu'il ne soit donc nécessaire de prévoir des moyens de calcul 11 dédiés) et le calculateur 10 jouera alors le rôle des moyens de calcul 11.

Suivant ce second mode de réalisation, les moyens de calcul 11 disposent des données d'entrée suivantes :

Les coordonnées ($P_{iT}$) des Amers dans le repère terrestre $R_T$ qui sont fournies par la base de données cartographiques 12 ;
Les angles de pointage en site et gisement ($\alpha_i$, $\beta_i$) pour chaque Amer, i variant de 1 à 3 ;
Les distances $D_i$ entre le véhicule et chaque Amer $P_i$ fournies par le télémètre 14.

Dans un premier temps on va réaliser avec la tourelle 2 les pointages successifs des trois Amers ($P_i$) et les angles de pointage en site et en gisement pour chaque Amer ($\alpha_i$, $\beta_i$) seront fournis aux moyens de calcul 11.

Lors de chaque pointage on réalisera par ailleurs une télémétrie de l'Amer considéré et on transmettra aux moyens de calcul 11 la valeur des distances ($D_i$) mesurées par le télémètre 14. Cette valeur est fournie aux moyens de calcul 11 par l'asservissement de pointage 6 ou bien directement par le télémètre 14.

Ces informations permettent le calcul des coordonnées des Amers ($P_{iV}$) dans le repère véhicule ($R_V$) - ou en d'autres termes la définition des coordonnées des trois vecteurs $VP_i$ reliant le véhicule (repère $R_V$ de centre V) à chacun des trois Amers ($P_i$).

On écrira les coordonnées ($x_i,y_i,z_i$) de chaque vecteur $P_{iV}$ dans le repère véhicule ($R_V$) :

$$x_i = D_i.\cos(\alpha_i).\cos(\beta_i)$$

$$y_i = D_i.\sin(\alpha_i).\cos(\beta_i)$$

$$z_i = - D_i.\sin(\beta_i)$$

On détermine par ailleurs les coordonnées des trois Amers ($P_{iT}$) dans le repère terrestre ($R_T$) à partir de la cartographie 12.

Les coordonnées des Amers sont ainsi définies dans le repère terrestre $R_T$ et dans le repère véhicule $R_V$.

Il est alors possible de calculer les angles d'orientation du repère véhicule ($R_V$) par rapport au repère terrestre ($R_T$) ainsi que les coordonnées du véhicule dans le repère terrestre ($R_T$).

Pour cela on résout les trois produits matriciels (un par Amer) :

$$P_{iT} = M_{TV} * P_{iV}$$

Expression dans laquelle :

$P_{iT}$ est le vecteur donnant les coordonnées de l'Amer $P_i$ dans le repère terrestre ($R_T$) ;
$P_{iV}$ est le vecteur qui donne les coordonnées de l'Amer $P_i$ dans le repère véhicule ($R_V$) ;
$M_{TV}$ est la matrice de passage du repère terrestre ($R_T$) au repère véhicule ($R_V$).

D'une façon classique les coefficients de la matrice de changement de repère $M_{TV}$ donnent, d'une part les angles d'orientation ($\varphi,\theta,\psi$) des axes du repère véhicule ($R_V$) par rapport à ceux du repère terrestre ($R_T$), et d'autre part la position du repère véhicule ($R_V$) par rapport au repère terrestre ($R_T$), donc les coordonnées dans le repère terrestre ($R_T$) du point V, centre du repère véhicule $R_V$.

On écrit habituellement le produit matriciel :

$M_{TV} = T* R_{ox}*R_{oy}*R_{oz}$ expression dans laquelle les matrices s'expriment de la façon suivante :

[Math. 2]

$$T = \begin{bmatrix} 1 & 0 & 0 & X_V \\ 0 & 1 & 0 & Y_V \\ 0 & 0 & 1 & Z_V \\ 0 & 0 & 0 & 1 \end{bmatrix}$$

[Math. 3]

$$Rox = \begin{bmatrix} 1 & 0 & 0 & 0 \\ 0 & Cos\varphi & -Sin\varphi & 0 \\ 0 & Sin\varphi & Cos\varphi & 0 \\ 0 & 0 & 0 & 1 \end{bmatrix} \quad Roy = \begin{bmatrix} Cos\theta & 0 & Sin\theta & 0 \\ 0 & 1 & 0 & 0 \\ -Sin\theta & 0 & Cos\theta & 0 \\ 0 & 0 & 0 & 1 \end{bmatrix} \quad Roz = \begin{bmatrix} Cos\psi & -Sin\psi & 0 & 0 \\ Sin\psi & Cos\psi & 0 & 0 \\ 0 & 0 & 1 & 0 \\ 0 & 0 & 0 & 1 \end{bmatrix}$$

L'avantage de ce mode de réalisation de l'invention est qu'il permet, non seulement de recaler la centrale inertielle du véhicule, mais également de fournir la position actualisée du véhicule sans qu'un GPS ne soit nécessaire.

Il est clair qu'il est possible d'équiper un véhicule de moyens de calcul comportant les deux types d'algorithmes et permettant donc de faire fonctionner, au choix, l'un ou l'autre des deux modes de réalisation du procédé selon l'invention.

On pourra utiliser le procédé associé au GPS lorsque ce dernier n'est pas brouillé. Un avantage étant la discrétion du pointage sans télémétrie.

On pourra utiliser le procédé associé au télémètre lorsque le GPS n'est pas disponible, avec cependant la perte de la discrétion du véhicule.

Le choix de l'algorithme à utiliser sera offert à l'opérateur sur l'écran de son interface Homme-Machine.

Que l'on mette en œuvre le premier ou le second mode de réalisation, les imprécisions sur les mesures conduisent obligatoirement à rechercher la résolution d'équations qui ne sont pas exactement vérifiées.

Les calculs seront donc de préférence conduits sous la forme de calculs d'optimisation, par exemple sous la forme d'itérations successives recherchant les valeurs des paramètres donnant le minimum pour un critère d'écart F entre les deux membres de chaque équation à résoudre.

Par exemple pour le premier mode de réalisation le critère F sera égal à :

[Math. 4]

$$F = \sum_{i=1}^{3} (M_{TV} * Amer_{iV} - Amer_i)^2$$

Expression dans laquelle, comme détaillé précédemment, $Amer_i$ est le vecteur de pointage d'un Amer dans le repère véhicule réduit ($R_{TV}$) ; $Amer_{iV}$ est le vecteur de pointage du même Amer dans le repère véhicule ($R_V$) calculé à partir des angles de site et gisement mesurés et $M_{TV}$ est la matrice de passage du repère terrestre ($R_T$) au repère véhicule ($R_V$), matrice réduite aux seuls coefficients de rotation.

Pour le second mode de réalisation le critère F sera égal à :

[Math. 5]

$$F = \sum_{i=1}^{3} (M_{TV} * P_{iV} - P_{iT})^2$$

Expression dans laquelle $P_{iV}$ correspond au vecteur des coordonnées de l'Amer $P_i$ dans le repère véhicule ($R_V$) et $P_{iT}$ correspond au vecteur des coordonnées de l'Amer $P_i$ dans le repère terrestre ($R_T$) et $M_{TV}$ est la matrice de passage du repère terrestre ($R_T$) au repère véhicule ($R_V$).

Dans un cas comme dans l'autre on cherchera à minimiser le critère F, par exemple en appliquant la méthode bien connue du gradient.

Dans un cas comme dans l'autre, il est nécessaire que le véhicule ou la plateforme soit à l'arrêt pour que le recalage de la centrale inertielle puisse être réalisé.

Afin d'éviter toute erreur de détermination, on associera le dispositif à un moyen permettant de vérifier l'arrêt du véhicule avant de lancer le procédé de recalage de la centrale inertielle.

On pourra par exemple coupler le dispositif à un odomètre ou à un compteur de vitesse du véhicule.

On a vu précédemment que la précision des calculs dépendait de la précision de la cartographie numérique utilisée.

La précision dépendra également de celles des moyens de mesure des angles d'orientation en site et en gisement de la direction de pointage ou d'observation $d_i$.

Suivant le mode de réalisation retenu, elle dépendra enfin de la précision du GPS 13 utilisé et/ou de celle du télémètre 14.

Il est clair qu'il est possible de définir une plateforme 1 qui est équipée de moyens de mesure des angles de pointage, d'un GPS et/ou d'un télémètre ainsi que d'une cartographie numérique ayant une précision minimale permettant d'assurer a priori le recalage avec un niveau de précision souhaité.

Il demeure alors cependant une incertitude liée au choix des Amers $P_i$ par l'opérateur.

En effet si les Amers sont trop proches les uns des autres ou bien s'ils sont trop proches du véhicule la précision du calcul sera mauvaise.

Afin d'assurer dans tous les cas le niveau de précision souhaité et selon une variante d'exécution du premier ou du second mode de réalisation, on procèdera, avant l'intégration des logiciels dans la plateforme ou le véhicule, à la réalisation d'abaques numériques 15 donnant l'incertitude sur les angles d'attitude calculés (dévers, pente et cap) en fonction des localisations des Amers par rapport au véhicule (angles de site et gisement de la direction de pointage de chaque Amer dans le repère véhicule et distances mesurées ou calculées par rapport au véhicule).

Ces abaques 15 sont facilement réalisées en procédant à des calculs préalables des incertitudes qui sont obtenues lorsque l'on fait varier les localisations des Amers dans un domaine géométrique donné. Bien entendu les calculs d'incertitude feront également intervenir les précisions des moyens de mesure et de la cartographie.

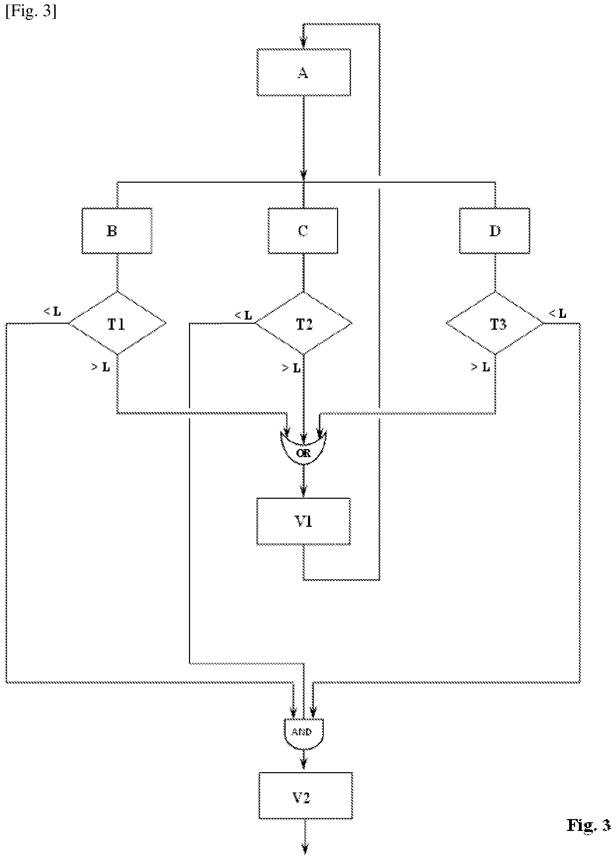

La figure 3 schématise les principales étapes de cette variante d'exécution du procédé selon l'invention.

Le bloc A correspond au choix et au pointage par l'opérateur des trois Amers. Les étapes B, C et D correspondent à l'extraction des abaques 15 des incertitudes qui sont associées à ces choix. Etape B : incertitude en dévers ($\varphi$), étape C : incertitude en pente ($\theta$) et étape D : incertitude en cap ($\psi$).

Chaque test T1, T2 et T3 compare l'incertitude angulaire obtenue avec un seuil L prédéfini et programmé. Le seuil d'incertitude est avantageusement le même pour chaque test, mais il serait possible de choisir un seuil différent pour chaque angle.

Si l'incertitude obtenue est supérieure au seuil L pour au moins un des angles (porte OR), on commande l'allumage d'un voyant rouge V1 et l'opérateur est invité à modifier son choix d'Amer (retour à l'étape A).

Si toutes les incertitudes sont inférieures au seuil L (porte AND) on commande l'allumage d'un voyant vert V2 et le procédé peut se poursuivre par le calcul effectif des données de recalage de la centrale inertielle.

L'affichage des voyants rouge ou vert interviendra avantageusement sur l'Interface Homme / Machine permettant le choix des Amers. Par exemple sur un écran ou sur un voyant dédié. L'écran sera associé à un moyen de commande (clavier, souris), l'écran pourra être un écran tactile.

On pourra assortir l'allumage du voyant rouge V1 de l'affichage de conseils pour l'opérateur : « choisir Amer plus éloignés » « choisir Amers plus écartés ».

Ces messages seront avantageusement incorporés dans les abaques 15 de définition des incertitudes puisque concrètement ces abaques permettent de connaître les zones qui donnent les précisions souhaitées, donc la localisation des trois Amers dans une Abaque permet de connaître quelles modifications doivent être apportées à un ou plusieurs Amers pour se rapprocher des zones de l'abaque donnant la précision souhaitée.

A titre de variante, il est également possible de définir un deuxième seuil L' (L'>L) qui sera vérifié au niveau de chaque sortie >L des tests T1,T2 et T3. Cette vérification sera faite par trois nouveaux tests T1', T2' et T3' (non représentés) qui permettront de vérifier si l'imprécision est inférieure ou non au deuxième seuil L'.

Ceci permettra, si l'imprécision est supérieure à L mais inférieure à L', de commander l'allumage par exemple d'un voyant orange et de laisser alors la possibilité à l'opérateur de lancer le recalage de la centrale inertielle avec une précision légèrement dégradée.

Si l'imprécision reste supérieure à L' l'opérateur devra modifier son choix d'amers.

Cette variante permet de pallier la difficulté possible d'obtenir de bons Amers sur certaines zones de terrain.

**Revendications**

1. Procédé de recalage d'une centrale inertielle (9) équipant un véhicule terrestre (1), le véhicule étant équipé d'au moins une tourelle (2) orientable en site et en gisement pour observer le terrain autour du véhicule et déterminer au moins une direction de pointage ($d_i$) d'au moins un objet présent sur le terrain, des moyens de mesure angulaire (7,8) pouvant donner les angles d'orientation en site et en gisement de la au moins une direction de pointage ($d_i$) dans un repère ($R_V$) lié au véhicule, ou repère véhicule, le véhicule étant par ailleurs équipé de moyens de calcul (11) auxquels sont reliés les moyens de mesure angulaire (7,8) et d'une base de données cartographiques (12) permettant de connaître les coordonnées de différents Amers ($P_i$) présents sur le terrain dans un repère terrestre ($R_T$), procédé comportant les étapes suivantes, réalisées lorsque le véhicule est à l'arrêt :

   - on réalise le pointage, à partir de la au moins une tourelle (2), d'au moins trois Amers ($P_1,P_2,P_3$) présents sur le terrain et dont les coordonnées géographiques dans le repère terrestre ($R_T$) sont connues ;
   - on enregistre les angles de site ($\beta$) et de gisement ($\alpha$) de chaque direction de pointage ($d_1,d_2,d_3$) dans le repère véhicule ($R_V$) ;
   - on détermine des coefficients d'une matrice $M_{TV}$ de passage du repère terrestre ($R_T$) au repère véhicule ($R_V$) en mettant en œuvre au moins un calcul de la direction des Amers ($P_1,P_2,P_3$) dans le repère véhicule ($R_V$) grâce aux mesures des angles des directions de pointage et la connaissance des coordonnées des Amers dans le repère terrestre ($R_T$) ;
   - on recale la centrale inertielle (9) du véhicule à partir des valeurs d'orientation et éventuellement de position du repère véhicule ($R_V$) par rapport au repère terrestre ($R_T$) ainsi calculées.

2. Procédé de recalage d'une centrale inertielle selon la revendication 1, procédé dans lequel le véhicule (1) est équipé d'un système de positionnement par satellite (ou GPS), (13) procédé comportant les étapes suivantes :

   - on calcule les trois vecteurs ($Amer_i$) des directions de pointage des Amers ($P_i$) dans un repère véhicule réduit ($R_{TV}$) à partir des positions des Amers dans le repère terrestre ($R_T$) qui sont données par la cartographie et de la position du véhicule (1) dans le repère terrestre ($R_T$) qui est donnée par le GPS (13), le repère véhicule réduit ($R_{TV}$) est un repère lié au véhicule mais dont les axes sont parallèles aux axes du repère terrestre ($R_T$), le calcul est donc effectué en considérant que les angles d'orientation du repère véhicule ($R_V$) par rapport au repère terrestre ($R_T$) sont nuls ;
   - on calcule les trois vecteurs ($Amer_{iV}$) des directions de pointage des Amers ($P_i$) dans le repère véhicule ($R_V$) à partir des angles de site et gisement mesurés ;
   - on en déduit les angles d'orientation du repère véhicule ($R_V$) par rapport au repère terrestre ($R_T$) par résolution des trois produits matriciels (un par Amer):
   $Amer_i = R_{ox}*R_{oy}*R_{oz}* Amer_{iV} = M_{TV} * Amer_{iV}$, expression dans laquelle $Amer_i$ est le vecteur de pointage d'un Amer ($P_i$) dans le repère véhicule réduit ($R_{TV}$) tel que déduit de la cartographie, $Amer_{iV}$ est le vecteur de pointage du même Amer ($P_i$) dans le repère véhicule ($R_V$) calculé à partir des angles de site et gisement mesurés et $R_{ox}$, $R_{oy}$ et $R_{oz}$ sont les matrices de rotation permettant de passer du repère terrestre au repère véhicule, le produit $R_{ox}*R_{oy}*R_{oz}$ de ces matrices constituant la matrice $M_{TV}$ de passage du repère terrestre ($R_T$) au repère véhicule ($R_V$), matrice qui est réduite aux seuls coefficients de rotation et donnant les angles d'orientation recherchés.

3. Procédé de recalage d'une centrale inertielle selon la revendication 1, procédé dans lequel le véhicule (1) est équipé d'un télémètre (14) porté par la tourelle (2), procédé comportant les étapes suivantes :

   - on calcule les coordonnées ($P_{iV}$) des Amers ($P_i$) dans le repère véhicule ($R_V$) à partir des angles de site et gisement mesurés et des distances ($D_i$) mesurées par le télémètre ;
   - on détermine les coordonnées ($P_{iT}$) des Amers ($P_i$) dans le repère terrestre ($R_T$) à partir de la cartographie ;

- on en déduit les angles d'orientation du repère véhicule ($R_V$) par rapport au repère terrestre ($R_T$) ainsi que les coordonnées du véhicule dans le repère terrestre ($R_T$) par la résolution des trois produits matriciels (un par Amer) :

$P_{iT} = M_{TV} * P_{iV}$, expression dans laquelle $P_{iT}$ est le vecteur donnant les coordonnées d'un Amer ($P_i$) dans le repère terrestre ($R_T$), $P_{iV}$ est le vecteur donnant les coordonnées du même Amer ($P_i$) dans le repère véhicule ($R_V$), et $M_{TV}$ est la matrice de passage du repère terrestre ($R_T$) au repère véhicule ($R_V$), les coefficients de cette matrice donnant d'une part les angles d'orientation du repère véhicule ($R_V$) par rapport au repère terrestre ($R_T$) et d'autre part la position du repère véhicule ($R_V$) par rapport au repère terrestre ($R_T$).

4. Procédé de recalage d'une centrale inertielle selon les revendications 2 et 3, procédé dans lequel on choisit un mode de calcul de recalage utilisant le système de positionnement par satellite (13) ou un mode de calcul de recalage utilisant le télémètre (14).

5. Procédé de recalage d'une centrale inertielle selon une des revendications 1 à 4, procédé dans lequel on détermine après le choix des Amers ($P_i$) par un opérateur les incertitudes angulaires prévisibles pour les angles de dévers, de pente et de cap par lecture d'abaques de précision (15) préétablies et on propose à l'opérateur de modifier ses choix d'Amers ($P_i$) si la ou les incertitudes sont supérieures à au moins un seuil (L).

6. Dispositif de recalage d'une centrale inertielle (9) équipant un véhicule terrestre (1), dispositif mettant en œuvre le procédé selon une des revendications 1 à 5, dispositif **caractérisé en ce qu'**il comporte des moyens de calcul (11) et une base de données cartographiques (12) permettant de connaître les coordonnées dans un repère terrestre ($R_T$) d'au moins trois Amers ($P_1, P_2, P_3$) présents sur le terrain, le dispositif comportant également des moyens (7,8) de mesure angulaire de l'orientation en site ($\beta$) et en gisement ($\alpha$) d'au moins une tourelle (2) équipant le véhicule (1) et permettant d'observer le terrain autour du véhicule (1) et de déterminer au moins une direction de pointage ($d_i$), les moyens de mesure angulaire pouvant donner les angles d'orientation en site ($\beta$) et en gisement ($\alpha$) de la au moins une direction de pointage ($d_i$) dans un repère ($R_V$) lié au véhicule, ou repère véhicule, les moyens de calcul (11) permettant de combiner les mesures des angles d'observation en site et en gisement et les coordonnées des Amers ($P_i$) connues de la base cartographique (12), pour déterminer des coefficients d'une matrice $M_{TV}$ de passage du repère terrestre ($R_T$) au repère véhicule ($R_V$), les moyens de calcul (11) étant reliés à la centrale inertielle (9) pour pouvoir la recaler à partir des valeurs d'orientation et éventuellement de position du repère véhicule ($R_V$) par rapport au repère terrestre ($R_T$) ainsi calculées.

7. Dispositif de recalage d'une centrale inertielle selon la revendication 6 et permettant la mise en œuvre du procédé selon la revendication 2, dispositif comportant un système de positionnement par satellite (ou GPS) (13), ce dernier étant utilisé par les moyens de calcul (11) pour déterminer le positionnement du repère véhicule ($R_V$) par rapport au repère terrestre ($R_T$).

8. Dispositif de recalage d'une centrale inertielle selon la revendication 6 et permettant la mise en œuvre du procédé selon la revendication 3, dispositif comportant un télémètre (14) porté par la tourelle (2), ce dernier étant utilisé en combinaison avec les moyens (7,8) de mesure angulaire de l'orientation en site et en gisement de la tourelle pour permettre le calcul des coordonnées ($P_{iV}$) des Amers dans le repère véhicule ($R_V$).

9. Dispositif de recalage d'une centrale inertielle selon les revendications 7 et 8, dispositif comportant une interface Homme-Machine donnant le choix à un opérateur entre un mode de calcul de recalage utilisant le système de positionnement par satellite (13) et un mode de calcul de recalage utilisant le télémètre (14).

10. Dispositif de recalage d'une centrale inertielle selon une des revendications 6 à 9, dispositif incorporant au moins une abaque (15) permettant de déterminer les incertitudes angulaires prévisibles pour les angles de dévers, de pente et de cap après le choix des Amers ($P_i$).

11. Dispositif de recalage d'une centrale inertielle selon la revendication 10, dispositif **caractérisé en ce qu'**elle comporte une interface Homme-Machine permettant d'indiquer à un opérateur si la ou les incertitudes sont supérieures à au moins un seuil (L).

12. Dispositif de recalage d'une centrale inertielle selon la revendication 11, dispositif **caractérisé en ce que** l'interface Homme-Machine impose à l'Opérateur de modifier ses choix d'Amers ($P_i$) si la ou les incertitudes sont supérieures à l'au moins un seuil (L).

**EP 4 004 492 B1**

**Patentansprüche**

1. - Verfahren zur Neujustierung einer inertialen Messeinheit (9), mit der ein Landfahrzeug (1) ausgestattet ist, wobei das Fahrzeug mit mindestens einem Turm (2) ausgestattet ist, der in Höhe und in Peilung ausrichtbar ist, um das Gelände um das Fahrzeug herum zu beobachten und mindestens eine Zielrichtung ($d_i$) mindestens eines auf dem Gelände vorhandenen Objekts zu bestimmen, Winkelmesseinrichtungen (7, 8), die die Höhen- und Peilwinkel der mindestens einen Zielrichtung ($d_i$) in einem mit dem Fahrzeug verbundenen Koordinatensystem ($R_V$), oder Fahrzeugkoordinatensystem, angeben können, wobei das Fahrzeug ferner mit Recheneinrichtungen (11), mit denen die Winkelmesseinrichtungen (7, 8) verbunden sind, und mit einer kartografischen Datenbank (12) ausgestattet ist, die es ermöglicht, die Koordinaten verschiedener Landmarken ($P_i$) zu kennen, die auf dem Gelände in einem terrestrischen Koordinatensystem ($R_T$) vorhanden sind, wobei das Verfahren die folgenden Schritte umfasst, die durchgeführt werden, wenn das Fahrzeug in Stillstand ist:

   - Anvisieren, anhand des mindestens einen Turms (2), von mindestens drei Landmarken ($P_1, P_2, P_3$), die auf dem Gelände vorhanden sind und deren geografische Koordinaten in dem terrestrischen Koordinatensystem ($R_T$) bekannt sind;
   - Registrieren des Höhen- ($\beta$) und Peilwinkels ($\alpha$) jeder Zielrichtung ($d_1, d_2, d_3$) in dem Fahrzeugkoordinatensystem ($R_V$);
   - Bestimmen der Koeffizienten einer $M_{TV}$-Matrix für den Übergang von dem terrestrischen Koordinatensystem ($R_T$) zu dem Fahrzeugkoordinatensystem ($R_V$), indem mindestens eine Berechnung der Richtung der Landmarken ($P_1, P_2, P_3$) in dem Fahrzeugkoordinatensystem ($R_V$) durch Messungen der Winkel der Zielrichtungen und Kenntnis der Koordinaten der Landmarken in dem terrestrischen Koordinatensystem ($R_T$) durchgeführt wird;
   - Neujustieren der inertialen Messeinheit (9) des Fahrzeugs anhand der berechneten Ausrichtungswerte und eventuell der Position des Fahrzeugkoordinatensystems ($R_V$) in Bezug auf das terrestrische Koordinatensystem ($R_T$).

2. - Verfahren zur Neujustierung einer inertialen Messeinheit nach Anspruch 1, wobei bei dem Verfahren das Fahrzeug (1) mit einem Satellitenpositionierungssystem (oder GPS) ausgestattet ist, (13) das Verfahren umfassend die folgenden Schritte:

   - Berechnen der drei Vektoren (Landmarke$_i$) der Zielrichtungen der Landmarken ($P_i$) in einem reduzierten Fahrzeugkoordinatensystem ($R_{TV}$) anhand der Positionen der Landmarken in dem terrestrischen Koordinatensystem ($R_T$), die durch die Kartographie gegeben sind, und anhand der Position des Fahrzeugs (1) in dem terrestrischen Koordinatensystem ($R_T$), die durch das GPS (13) gegeben ist, wobei das reduzierte Fahrzeugkoordinatensystem ($R_{TV}$) ein mit dem Fahrzeug verbundenes Koordinatensystem ist, dessen Achsen jedoch parallel zu den Achsen des terrestrischen Koordinatensystems ($R_T$) sind, weshalb die Berechnung daher unter der Annahme durchgeführt, dass die Ausrichtungswinkel des Fahrzeugkoordinatensystems ($R_V$) in Bezug auf das terrestrische Koordinatensystem ($R_T$) null sind;
   - Berechnen der drei Vektoren (Landmarke$_{iv}$) der Zielrichtungen der Landmarken ($P_i$) in dem Fahrzeugkoordinatensystem ($R_V$) anhand der gemessenen Höhen- und Peilungswinkel;
   - Ableiten der Ausrichtungswinkel des Fahrzeugkoordinatensystems ($R_V$) in Bezug auf das terrestrische Koordinatensystem ($R_T$) durch Auflösen der drei Matrixprodukte (eines pro Landmarke):
   Landmarke$_i$ = $R_{ox} * R_{oy} * R_{oz}$ * Landmarke$_{iv}$ = $M_{TV}$ * Landmarke$_{iv}$, wobei Landmarke$_i$ der Zeigervektor einer Landmarke ($P_i$) in dem reduzierten Fahrzeugkoordinatensystem ($R_{TV}$) ist, wie er aus der Kartierung abgeleitet ist, Landmarke$_{iv}$ der Zeigervektor derselben Landmarke ($P_i$) in dem Fahrzeugkoordinatensystem ($R_V$) ist, der anhand der gemessenen Höhen- und Peilwinkel berechnet wird, und $R_{ox}$, $R_{oy}$ und $R_{oz}$ die Rotationsmatrizen sind, die einen Übergang von dem terrestrischen Koordinatensystem zu dem Fahrzeugkoordinatensystem ermöglichen, das Produkt $R_{ox} * R_{oy} * R_{oz}$ dieser Matrizen die Matrix $M_{TV}$ für den Übergang von dem terrestrischen Koordinatensystem ($R_T$) zu dem Fahrzeugkoordinatensystem ($R_V$) darstellt, eine Matrix, die nur auf die Drehkoeffizienten reduziert ist und die gesuchten Ausrichtungswinkel ergibt.

3. - Verfahren zum Nachjustieren einer inertialen Messeinheit nach Anspruch 1, wobei in dem Verfahren das Fahrzeug (1) mit einem vom Turm (2) getragenen Entfernungsmesser (14) ausgestattet ist, das Verfahren umfassend die folgenden Schritte:

   - Berechnen der Koordinaten ($P_{iV}$) der Landmarken ($P_i$) in dem Fahrzeugkoordinatensystem ($R_V$) anhand der gemessenen Höhen- und Peilwinkel und der von dem Entfernungsmesser gemessenen Entfernungen ($D_i$);
   - Bestimmen der Koordinaten ($P_{iT}$) der Landmarken ($P_i$) in dem terrestrischen Koordinatensystem ($R_T$) anhand der Kartographie;

- Ableiten der Ausrichtungswinkel des Fahrzeugkoordinatensystems ($R_V$) in Bezug auf das terrestrischen Koordinatensystem ($R_T$) und der Koordinaten des Fahrzeugs in dem terrestrischen Koordinatensystem ($R_T$) durch Auflösen der drei Matrixprodukte (eines pro Landmarke):

$P_{iT} = M_{TV} * P_{iv}$, ein Ausdruck, in dem $P_{iT}$ der Vektor ist, der die Koordinaten eines Landmarke ($P_i$) in dem terrestrischen Koordinatensystem ($R_T$) angibt, $P_{iv}$ der Vektor ist, der die Koordinaten derselben Landmarke ($P_i$) in dem Fahrzeugkoordinatensystem ($R_V$) angibt, und $M_{TV}$ die Matrix für den Übergang von dem terrestrischen Koordinatensystem ($R_T$) zu dem Fahrzeugkoordinatensystem ($R_V$) ist, wobei die Koeffizienten dieser Matrix einerseits die Ausrichtungswinkel des Fahrzeugkoordinatensystems ($R_V$) in Bezug auf das terrestrische Koordinatensystem ($R_T$) und andererseits die Position des Fahrzeugkoordinatensystems ($R_V$) in Bezug auf das terrestrische Koordinatensystem ($R_T$) angeben.

4. - Verfahren zur Neujustierung einer inertialen Messeinheit nach den Ansprüchen 2 und 3, wobei bei dem Verfahren ein Modus zum Berechnen der Neujustierung unter Verwendung des Satellitenpositionierungssystems (13) oder ein Modus zur Berechnung der Neujustierung unter Verwendung des Entfernungsmessers (14) gewählt wird.

5. - Verfahren zur Neujustierung einer inertialen Messeinheit nach einem der Ansprüche 1 bis 4, Verfahren, bei dem nach der Wahl der Landmarken ($P_i$) durch einen Bediener die vorhersehbaren Winkelunsicherheiten für die Überhang-, Neigungs- und Kurswinkel durch Lesen von voreingestellten Präzisionsdiagrammen (15) bestimmt werden und dem Bediener vorgeschlagen wird, seine Wahl der Landmarken ($P_i$) zu ändern, wenn die Unsicherheit(en) größer sind als mindestens ein Schwellenwert (L).

6. - Vorrichtung zur Neujustierung einer inertialen Messeinheit (9), mit der ein Landfahrzeug (1) ausgestattet ist, wobei die Vorrichtung das Verfahren nach einem der Ansprüche 1 bis 5 durchführt, wobei die Vorrichtung, **dadurch gekennzeichnet ist, dass** sie Recheneinrichtungen (11) und eine kartografische Datenbank (12) umfasst, die es ermöglichen, die Koordinaten in einem terrestrischen Koordinatensystem ($R_T$) von mindestens drei im Gelände vorhandenen Landmarken ($P_1,P_2,P_3$) zu kennen, wobei die Vorrichtung auch Einrichtungen (7, 8) zur Winkelmessung der Ausrichtung in Höhe ($\beta$) und in Peilung ($\alpha$) von mindestens einem Turm (2) umfasst, mit dem das Fahrzeug (1) ausgerüstet ist und die es ermöglichen, das Gelände um das Fahrzeug (1) herum zu beobachten und mindestens eine Zielrichtung ($d_i$) zu bestimmen, die Winkelmesseinrichtungen die Höhen- ($\beta$) und Peilwinkel ($\alpha$) der mindestens einen Zielrichtung ($d_i$) in einem mit dem Fahrzeug verbundenen Koordinatensystem ($R_V$), oder Fahrzeugkoordinatensystem, angeben können, die Recheneinrichtungen (11) es ermöglichen, die Messungen der Beobachtungswinkel in Höhe und in Peilung und die Koordinaten der Landmarken ($P_i$), die aus der kartografischen Basis (12) bekannt sind, zu kombinieren, um Koeffizienten einer $M_{TV}$-Matrix für den Übergang von dem terrestrischen Koordinatensystem ($R_T$) zu dem Fahrzeugbezugssystem ($R_V$) zu bestimmen, wobei die Berechnungseinrichtungen (11) mit der inertialen Messeinheit (9) verbunden sind, um diese anhand der berechneten Werte der Ausrichtung und eventuell der Position des Fahrzeugkoordinatensystems ($R_V$) in Bezug auf das terrestrischen Koordinatensystem ($R_T$) neu justieren zu können.

7. - Vorrichtung zur Neujustierung einer inertialen Messeinheit nach Anspruch 6 und das die Durchführung des Verfahrens nach Anspruch 2 ermöglicht, die Vorrichtung umfassend ein Satellitenpositionierungssystem (oder GPS) (13), wobei dieses von den Berechnungseinrichtungen (11) verwendet wird, um die Positionierung des Fahrzeugkoordinatensystems ($R_V$) in Bezug auf das terrestrische Koordinatensystem ($R_T$) zu bestimmen.

8. - Vorrichtung zur Nachjustierung einer inertialen Messeinheit nach Anspruch 6 und das die Durchführung des Verfahrens nach Anspruch 3 ermöglicht, die Vorrichtung umfassend einen Entfernungsmesser (14), der von dem Turm (2) getragen wird, wobei letztere in Kombination mit den Einrichtungen (7, 8) zur Winkelmessung der Höhen- und Peilungsausrichtung des Turms verwendet wird, um die Berechnung der Koordinaten ($P_{iV}$) der Landmarken in dem Fahrzeugkoordinatensystem ($R_V$) zu ermöglichen.

9. - Vorrichtung zur Neujustierung einer inertialen Messeinheit nach den Ansprüchen 7 und 8, die Vorrichtung umfassend eine Mensch-Maschine-Schnittstelle, die einem Bediener die Wahl zwischen einem Modus zum Berechnen der Neujustierung unter Verwendung des Satellitenpositionierungssystems (13) und einem Modus zum Berechnen der Neujustierung unter Verwendung des Entfernungsmessers (14) gibt.

10. - Vorrichtung zur Neujustierung einer inertialen Messeinheit nach einem der Ansprüche 6 bis 9, wobei die Vorrichtung mindestens einen Abakus (15) integriert, der es ermöglicht, die zu erwartenden Winkelunsicherheiten für die Überhang-, Neigungs- und Kurswinkel nach der Wahl der Landmarken ($P_i$) zu bestimmen.

**11.** - Vorrichtung zur Neujustierung einer inertialen Messeinheit nach Anspruch 10, wobei die Vorrichtung **dadurch gekennzeichnet ist, dass** sie eine Mensch-Maschine-Schnittstelle umfasst, die es ermöglicht, einem Bediener anzugeben, ob die Unsicherheit(en) größer als mindestens ein Schwellenwert (L) sind.

**12.** - Vorrichtung zur Neujustierung einer inertialen Messeinheit nach Anspruch 11, wobei die Vorrichtung **dadurch gekennzeichnet ist, dass** die Mensch-Maschine-Schnittstelle den Bediener dazu auffordert, seine Wahl der Landmarke ($P_i$) zu ändern, wenn die Unsicherheit(en) größer sind als der mindestens eine Schwellenwert (L).

**Claims**

**1.** - A method for resetting an inertial navigation system (9) fitted to a land vehicle (1), the vehicle being equipped with at least one turret (2) which can be oriented in elevation and in bearing in order to observe the field around the vehicle and to determine at least one pointing direction ($d_i$) of at least one object present on the field, angular measurement means (7, 8) being able to give the angles of orientation in elevation and in bearing of the at least one pointing direction ($d_i$) in a reference frame ($R_V$) linked to the vehicle, referred to as the vehicle reference frame, the vehicle being also being equipped with calculation means (11) to which the angular measurement means (7, 8) are connected and with a map database (12) making it possible to know the coordinates of various landmarks ($P_i$) present on the field in a terrestrial reference frame ($R_T$), the method comprising the following steps, carried out when the vehicle is stationary:

- performing pointing, from the at least one turret (2), of at least three landmarks ($P_1,P_2,P_3$) present on the field and whose geographical coordinates in the terrestrial reference frame ($R_T$) are known;
- recording the elevation angle ($\beta$) and bearing angle ($\alpha$) of each pointing direction ($d_1,d_2,d_3$) in the vehicle reference frame ($R_V$);
- determining coefficients of a matrix $M_{TV}$ for passing from the terrestrial reference frame ($R_T$) to the vehicle reference frame ($R_V$) by implementing at least one calculation of the direction of the landmarks ($P_1,P_2,P_3$) in the vehicle reference frame ($R_V$) by means of the measurements of the angles of the pointing directions and the knowledge of the coordinates of the landmarks in the terrestrial reference frame ($R_T$);
- resetting the inertial navigation system (9) of the vehicle on the basis of the thus-calculated values of orientation and possibly of position of the vehicle reference frame ($R_V$) relative to the terrestrial reference frame ($R_T$).

**2.** - The method for resetting an inertial navigation system according to claim 1, method in which the vehicle (1) is equipped with a satellite positioning system (GPS) (13), the method comprising the following steps:

- calculating the three vectors ($Amer_i$) of the pointing directions of the landmarks ($P_i$) in a reduced vehicle reference frame ($R_{TV}$) from the positions of the landmarks in the terrestrial reference frame ($R_T$), which are given by the mapping, and from the position of the vehicle (1) in the terrestrial reference frame ($R_T$), which is given by the GPS (13), the reduced vehicle reference frame ($R_{TV}$) being a reference frame linked to the vehicle but whose axes are parallel to the axes of the terrestrial reference frame ($R_T$), the calculation being therefore carried out by considering that the orientation angles of the vehicle reference frame ($R_V$) relative to the terrestrial reference frame ($R_T$) are null;
- calculating the three vectors ($Amer_{iV}$) of the pointing directions of the landmarks ($P_i$) in the vehicle reference frame ($R_V$) from the measured elevation and bearing angles;
- deducing the orientation angles of the vehicle reference frame ($R_V$) relative to the terrestrial reference frame ($R_T$) by solving the three matrix multiplications (one per landmark):
$Amer_i = R_{ox}*R_{oy}*R_{oz} * Amer_{iV} = M_{TV} * Amer_{iV}$, where $Amer_i$ is the pointing vector of a landmark ($P_i$) in the reduced vehicle reference frame ($R_{TV}$) as deduced from the mapping, $Amer_{iV}$ is the pointing vector of the same landmark ($P_i$) in the vehicle reference frame ($R_V$) calculated from the measured elevation and bearing angles, and $R_{ox}$, $R_{oy}$ and $R_{oz}$ are the rotation matrices making it possible to pass from the terrestrial reference frame to the vehicle reference frame, the product $R_{ox}*R_{oy}*R_{oz}$ of these matrices constituting the matrix $M_{TV}$ for passing from the terrestrial reference frame ($R_T$) to the vehicle reference frame ($R_V$), said matrix being reduced to the rotation coefficients only and giving the desired orientation angles.

**3.** - The method for resetting an inertial navigation system according to claim 1, method in which the vehicle (1) is equipped with a rangefinder (14) carried by the turret (2), the method comprising the following steps:

- calculating the coordinates ($P_{iV}$) of the landmarks ($P_i$) in the vehicle reference frame ($R_V$) from the measured elevation and bearing angles and the distances ($D_i$) measured by the rangefinder;

- determining the coordinates ($P_{iT}$) of the landmarks ($P_i$) in the terrestrial reference frame ($R_T$) from the mapping;
- deducing the orientation angles of the vehicle reference frame ($R_V$) relative to the terrestrial reference frame ($R_T$) as well as the coordinates of the vehicle in the terrestrial reference frame ($R_T$) by solving the three matrix multiplications (one per landmark):

$P_{iT} = M_{TV} * P_{iV}$, where $P_{iT}$ is the vector giving the coordinates of a landmark ($P_i$) in the terrestrial reference frame ($R_T$), $P_{iV}$ is the vector giving the coordinates of the same landmark ($P_i$) in the vehicle reference frame ($R_V$), and $M_{TV}$ is the matrix for passing from the terrestrial reference frame ($R_T$) to the vehicle reference frame ($R_V$), the coefficients of this matrix giving, on the one hand, the orientation angles of the vehicle reference frame ($R_V$) relative to the terrestrial reference frame ($R_T$) and, on the other hand, the position of the vehicle reference frame ($R_V$) relative to the terrestrial reference frame ($R_T$).

4. - The method for resetting an inertial navigation system according to claims 2 and 3, wherein the method includes choosing a resetting calculation mode that uses the satellite positioning system (13) or a resetting calculation mode that uses the rangefinder (14).

5. - The method for resetting an inertial navigation system according to one of claims 1 to 4, method in which, after an operator has chosen the landmarks ($P_i$), the predictable angular uncertainties for the tilt, slope and heading angles are determined by reading preestablished accuracy nomographs (15), and the operator is offered the possibility to modify his choice of landmarks ($P_i$) if the one or more uncertainties are higher than at least one threshold (L).

6. - A device for resetting an inertial navigation system (9) fitted to a land vehicle (1), the device implementing the method according to one of claims 1 to 5, the device being **characterised in that** it includes calculation means (11) and a map database (12) making it possible to know the coordinates, in a terrestrial reference frame ($R_T$), of at least three landmarks ($P_1,P_2,P_3$) present on the field, the device also including means (7, 8) for angular measurement of the orientation in elevation ($\beta$) and in bearing ($\alpha$) of at least one turret (2) fitted to the vehicle (1) and making it possible to observe the field around the vehicle (1) and to determine at least one pointing direction ($d_i$), the angular measurement means being able to give the angles of orientation in elevation ($\beta$) and in bearing ($\alpha$) of the at least one pointing direction ($d_i$) in a reference frame ($R_V$) linked to the vehicle, referred to as the vehicle reference frame, the calculation means (11) making it possible to combine the measurements of the angles of observation in elevation and in bearing and the coordinates of the landmarks ($P_i$) known from the map database (12), to determine coefficients of a matrix $M_{TV}$ for passing from the terrestrial reference frame ($R_T$) to the vehicle reference frame ($R_V$), the calculation means (11) being connected to the inertial navigation system (9) in order to be able to reset it on the basis of the thus-calculated values of orientation and possibly of position of the vehicle reference frame ($R_V$) relative to the terrestrial reference frame ($R_T$).

7. - The device for resetting an inertial navigation system according to claim 6 and enabling the implementation of the method according to claim 2, wherein the device includes a satellite positioning system (GPS) (13), the latter being used by the calculation means (11) to determine the position of the vehicle reference frame ($R_V$) relative to the terrestrial reference frame ($R_T$).

8. - The device for resetting an inertial navigation system according to claim 6 and enabling the implementation of the method according to claim 3, wherein the device includes a rangefinder (14) carried by the turret (2), the rangefinder being used in combination with the means (7, 8) for angular measurement of the orientation in elevation and in bearing of the turret to enable the calculation of the coordinates ($P_{iV}$) of the landmarks in the vehicle reference frame ($R_V$).

9. - The device for resetting an inertial navigation system according to claims 7 and 8, wherein the device includes a human-machine interface giving an operator the choice between a resetting calculation mode that uses the satellite positioning system (13) and a resetting calculation mode that uses the rangefinder (14).

10. - The device for resetting an inertial navigation system according to one of claims 6 to 9, wherein the device incorporates at least one nomograph (15) making it possible to determine the predictable angular uncertainties for the tilt, slope and heading angles after the landmarks ($P_i$) have been chosen.

11. - The device for resetting an inertial navigation system according to claim 10, **characterised in that** it includes a human-machine interface making it possible to indicate to an operator if the one or more uncertainties are higher than at least one threshold (L).

12. - The device for resetting an inertial navigation system according to claim 11, **characterised in that** the human-machine interface imposes on the operator to modify his choices of landmarks ($P_i$) if the one or more uncertainties are higher than the at least one threshold (L).

[Fig. 1]

Fig. 1

[Fig. 2]

Fig. 2

[Fig. 3]

Fig. 3

**RÉFÉRENCES CITÉES DANS LA DESCRIPTION**

**Documents brevets cités dans la description**

- US 5755400 A
- US 5809457 A
- EP 3495837 A1
- US 8260567 B1